(19) Europäisches Patentamt
European Patent Office
Office européen des brevets

(11) **EP 4 354 384 A1**

(12) **EUROPEAN PATENT APPLICATION**
published in accordance with Art. 153(4) EPC

(43) Date of publication:
17.04.2024 Bulletin 2024/16

(51) International Patent Classification (IPC):
*G06T 5/50* *(2006.01)*

(21) Application number: 21955425.0

(52) Cooperative Patent Classification (CPC):
G06T 5/50

(22) Date of filing: 31.08.2021

(86) International application number:
PCT/CN2021/115770

(87) International publication number:
WO 2023/028866 (09.03.2023 Gazette 2023/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Huawei Technologies Co., Ltd.
Shenzhen, Guangdong 518129 (CN)

(72) Inventor: ZHANG, Yi
Shenzhen, Guangdong 518129 (CN)

(74) Representative: Maiwald GmbH
Engineering
Elisenhof
Elisenstrasse 3
80335 München (DE)

(54) **IMAGE PROCESSING METHOD AND APPARATUS, AND VEHICLE**

(57) This application provides an image processing method and apparatus, and a vehicle, and relates to the fields such as artificial intelligence, autonomous driving, and computer vision. The method is mainly applied to a convolutional neural network model, and the method includes: obtaining a current RAW image frame; determining a first feature of the current RAW image frame; parsing context feature information of the current RAW image frame, where the context feature information includes local feature information and global feature information; determining a local feature and a global feature in the first feature based on the local feature information and the global feature information; and fusing the global feature and the local feature to obtain a feature fusion map of the current RAW image frame. According to the solutions of this application, complexity of an algorithm in an image processing procedure can be reduced.

700

| S710: Obtain a current frame of RAW image |
| --- |
| S720: Determine a first feature of the current frame of RAW image |
| S730: Parse context feature information of the current frame of RAW image |
| S740: Determine a local feature and a global feature in the first feature based on the local feature information and the global feature information |
| S750: Fuse the global feature and the local feature to obtain a feature fusion map of the current frame of RAW image |

FIG. 7

EP 4 354 384 A1

## Description

### TECHNICAL FIELD

This application relates to the artificial intelligence field, and more specifically, to an image processing method and apparatus, and a vehicle.

### BACKGROUND

With continuous development of autonomous driving technologies, vehicle-mounted cameras are increasingly widely used. A working principle of a vehicle-mounted camera is as follows: An optical image of a target object is generated by using a lens and is projected onto an image sensor to obtain a bayer (bayer) image, then an analog electrical signal is obtained through optical-to-electrical conversion, and further a digital image signal (namely, a raw image (RAW image)) is obtained through denoise and analog-to-digital conversion. After the RAW image is obtained, the RAW image needs to be processed, and then an image in a specific format is generated for an autonomous driving system to perform perception processing.

In an existing solution, the RAW image is usually processed by an image signal processing (image signal processing, ISP). However, the ISP is a set of complex image processing algorithms (including black level compensation, bad pixel correction, color interpolation, bayer denoise, white balance correction, color reproduction and correction, gamma (gamma) correction, color denoise and edge enhancement in color space, color and contrast enhancement, auto exposure control, and the like). In addition, each independent algorithm needs to adapt to different weather and scenarios, resulting in high complexity of the algorithm.

Therefore, how to reduce complexity of an algorithm in an image processing procedure is an urgent technical problem to be resolved.

### SUMMARY

This application provides an image processing method and apparatus, and a vehicle, to reduce complexity of an algorithm in an image processing procedure.

According to a first aspect, an image processing method is provided. The method is applied to a convolutional neural network model, and the method includes: obtaining a current RAW image frame; determining a first feature of the current RAW image frame; parsing context feature information of the current RAW image frame, where the context feature information includes local feature information and global feature information; determining a local feature and a global feature in the first feature based on the local feature information and the global feature information; and fusing the global feature and the local feature to obtain a feature fusion map of the current RAW image frame.

In this embodiment of this application, the convolutional neural network model is mainly used to replace ISP in an existing solution for processing the current RAW image frame, so that complexity of an algorithm in an image processing procedure is reduced. In addition, in the image processing procedure, the local feature and the global feature of the current RAW image frame are determined based on the context feature information, so that accuracy of determining the local feature and the global feature is improved. This can improve quality of a final image.

With reference to the first aspect, in some implementations of the first aspect, the method further includes: obtaining a previous RAW image frame; and extracting a second feature of the previous RAW image frame; and the determining a first feature of the current RAW image frame includes: extracting a third feature of the current RAW image frame; and determining the first feature of the current RAW image frame based on the second feature and the third feature.

In this embodiment of this application, the first feature of the current RAW image frame may be determined based on features extracted from two consecutive frames of images. This can ensure that the determined first feature of the current RAW image frame is robust, so that time sequence consistency in brightness and color of a video is ensured, and a flicker phenomenon is avoided.

With reference to the first aspect, in some implementations of the first aspect, the determining the first feature of the current RAW image frame based on the second feature and the third feature includes: determining a coincided-scene area of the previous RAW image frame and the current RAW image frame; determining, based on the coincided-scene area, a fourth feature that is in the second feature and that corresponds to the coincided-scene area; determining, based on the coincided-scene area, a fifth feature that is in the third feature and that corresponds to the coincided-scene area; and determining the first feature of the current RAW image frame based on a difference between the fourth feature and the fifth feature.

In this embodiment of this application, the first feature of the current RAW image frame may be determined based on a difference between features corresponding to the coincided-scene area of the two consecutive frames of images, so that the difference in the same scene area of the two consecutive frames falls within an appropriate range.

This can ensure that the determined first feature of the current RAW image frame is robust, so that time sequence consistency in brightness and color of a video is ensured, and a flicker phenomenon is avoided.

With reference to the first aspect, in some implementations of the first aspect, the determining the first feature of the current RAW image frame based on a difference between the fourth feature and the fifth feature includes: if the difference between the fourth feature and the fifth feature is less than or equal to a first threshold, determining the first feature of the current RAW image frame based on the fifth feature; if the difference between the fourth feature and the fifth feature is greater than a first threshold and less than a second threshold, determining the first feature of the current RAW image frame based on the fourth feature and the fifth feature; or if the difference between the fourth feature and the fifth feature is greater than or equal to a second threshold, determining the first feature of the current RAW image frame based on the fourth feature.

With reference to the first aspect, in some implementations of the first aspect, a resolution of the previous RAW image frame is half of a resolution of the current RAW image frame.

In this embodiment of this application, the resolution of the previous RAW image frame is set to be half of the resolution of the current RAW image frame. This can reduce a processing amount of the convolutional neural network model, and further reduce a requirement on computing power.

With reference to the first aspect, in some implementations of the first aspect, a same weight coefficient is used to extract the third feature of the current RAW image frame and the second feature of the previous RAW image frame.

In this embodiment of this application, the same weight coefficient is used to extract the third feature of the current RAW image frame and the second feature of the previous RAW image frame. In this way, in the convolutional neural network model, features of two frames of images can be extracted through weight value sharing. In other words, the features of the two frames of images are extracted by using a weight matrix. In this case, the features corresponding to the coincided-scene area of the two frames of images can be compared more intuitively, so that accuracy of processing data is improved. In addition, a quantity of network parameters that need to be stored in the convolutional neural network model can be further reduced.

With reference to the first aspect, in some implementations of the first aspect, the method further includes: generating an RGB image based on the feature fusion map.

With reference to the first aspect, in some implementations of the first aspect, the method further includes: sending the feature fusion map or the RGB image to a perception processing module.

In this embodiment of this application, the obtained feature fusion map may be directly sent to the perception processing module. This can reduce a requirement of the perception processing module on computing power.

With reference to the first aspect, in some implementations of the first aspect, the method further includes: evaluating the generated RGB image; and optimizing the convolutional neural network model based on an evaluation result.

Optionally, the generated RGB image may be evaluated by using an evaluation model.

Optionally, an evaluation model used for evaluation may be pre-trained by using a sample RGB image training set. The evaluation model may be a neural network model. The model may be used to evaluate the RGB image generated by using the convolutional neural network model. In addition, the evaluation result can promote continuous optimization of the convolutional neural network model. In this way, an image output by the convolutional neural network model is more beneficial to a perception algorithm, so that precision of perception processing is improved.

With reference to the first aspect, in some implementations of the first aspect, the global feature includes at least one of global brightness, white balance, color, and contrast, and the local feature includes at least one of local texture details and local contrast.

According to a second aspect, an image processing apparatus is provided. The apparatus is used in a convolutional neural network model, and the apparatus includes: an obtaining module, configured to obtain a current RAW image frame; and a processing module, configured to determine a first feature of the current RAW image frame; parse context feature information of the current RAW image frame, where the context feature information includes local feature information and global feature information; determine a local feature and a global feature in the first feature based on the local feature information and the global feature information; and fuse the global feature and the local feature to obtain a feature fusion map of the current RAW image frame.

With reference to the second aspect, in some implementations of the second aspect, the obtaining module is further configured to obtain a previous RAW image frame. The processing module is further configured to: extract a second feature of the previous RAW image frame; extract a third feature of the current RAW image frame; and determine the first feature of the current RAW image frame based on the second feature and the third feature.

With reference to the second aspect, in some implementations of the second aspect, the processing module is further configured to: determine a coincided-scene area of the previous RAW image frame and the current RAW image frame; determine, based on the coincided-scene area, a fourth feature that is in the second feature and that corresponds to the coincided-scene area; determine, based on the coincided-scene area, a fifth feature that is in the third feature and that corresponds to the coincided-scene area; and determine the first feature of the current RAW image frame based on a difference between the fourth feature and the fifth feature.

With reference to the second aspect, in some implementations of the second aspect, the processing module is further configured to: if the difference between the fourth feature and the fifth feature is less than or equal to a first threshold, determine the first feature of the current RAW image frame based on the fifth feature; if the difference between the fourth feature and the fifth feature is greater than a first threshold and less than a second threshold, determine the first feature of the current RAW image frame based on the fourth feature and the fifth feature; or if the difference between the fourth feature and the fifth feature is greater than or equal to a second threshold, determine the first feature of the current RAW image frame based on the fourth feature.

With reference to the second aspect, in some implementations of the second aspect, a resolution of the previous RAW image frame is half of a resolution of the current RAW image frame.

With reference to the second aspect, in some implementations of the second aspect, a same weight coefficient is used to extract the third feature of the current RAW image frame and the second feature of the previous RAW image frame.

With reference to the second aspect, in some implementations of the second aspect, the processing module is further configured to generate an RGB image based on the feature fusion map.

With reference to the second aspect, in some implementations of the second aspect, the apparatus further includes a sending module, configured to send the feature fusion map or the RGB image to a perception processing module.

With reference to the second aspect, in some implementations of the second aspect, the processing module is further configured to: evaluate the generated RGB image; and optimize the convolutional neural network model based on an evaluation result.

With reference to the second aspect, in some implementations of the second aspect, the global feature includes at least one of global brightness, white balance, color, and contrast, and the local feature includes at least one of local texture details and local contrast.

According to a third aspect, an image processing apparatus is provided, and includes an input/output interface, a processor, and a memory. The processor is configured to control the input/output interface to receive and send a signal or information, the memory is configured to store a computer program, and the processor is configured to invoke the computer program from the memory and run the computer program, so that the image processing apparatus performs the image processing method according to any one of the first aspect or the possible implementations of the first aspect.

According to a fourth aspect, a vehicle is provided, and includes modules configured to perform the image processing method according to any one of the first aspect or the possible implementations of the first aspect.

According to a fifth aspect, a terminal device is provided, and includes modules configured to perform the image processing method according to any one of the first aspect or the possible implementations of the first aspect.

Optionally, the terminal device may be any device, for example, a mobile phone, a tablet computer, a vehicle, a computer, a machine vision recognition device, or an intelligent security device, related to the vision field.

According to a sixth aspect, a computing device is provided, and includes at least one processor and a memory. The at least one processor is coupled to the memory, and is configured to read and execute instructions in the memory, to perform the image processing method according to any one of the first aspect or the possible implementations of the first aspect.

According to a seventh aspect, a computer program product including instructions is provided. When the computer program product runs on a computer, the computer is enabled to perform the image processing method according to any one of the first aspect or the possible implementations of the first aspect.

According to an eighth aspect, a computer-readable medium is provided. The computer-readable medium stores program code. When the program code is run on a computer, the computer is enabled to perform the image processing method according to any one of the first aspect or the possible implementations of the first aspect.

According to a ninth aspect, a chip is provided. The chip includes a processor and a data interface. The processor reads, through the data interface, instructions stored in a memory, to perform the image processing method according to any one of the first aspect or the possible implementations of the first aspect.

Optionally, in an implementation, the chip may further include the memory. The memory stores the instructions, and the processor is configured to execute the instructions stored in the memory. When the instructions are executed, the processor is configured to perform the image processing method according to any one of the first aspect or the possible implementations of the first aspect.

According to a tenth aspect, a chip system is provided. The chip system includes at least one processor, configured to support implementation of a function according to the first aspect or some implementations of the first aspect, for example, receiving or processing data and/or information in the foregoing method.

In a possible design, the chip system further includes a memory. The memory is configured to store program instructions and data, and the memory is located inside or outside the processor. The chip system may include a chip, or may include a chip and another discrete component.

**BRIEF DESCRIPTION OF DRAWINGS**

FIG. 1 is an example diagram of a processing procedure of an ISP;
FIG. 2 is an example diagram of a structure of a system architecture according to an embodiment of this application;
FIG. 3 is an example diagram of a structure of a convolutional neural network according to an embodiment of this application;
FIG. 4 is an example diagram of a structure of another convolutional neural network according to an embodiment of this application;
FIG. 5 is an example diagram of a hardware structure of a chip according to an embodiment of this application;
FIG. 6 is an example diagram of a system architecture for image processing according to an embodiment of this application;
FIG. 7 is an example diagram of an image processing method according to an embodiment of this application;
FIG. 8 is an example diagram of a system architecture of a convolutional neural network model according to an embodiment of this application;
FIG. 9 is an example diagram of an image processing apparatus according to an embodiment of this application; and
FIG. 10 is a block diagram of an example of a hardware structure of an apparatus according to an embodiment of this application.

**DESCRIPTION OF EMBODIMENTS**

The following describes technical solutions of this application with reference to accompanying drawings.

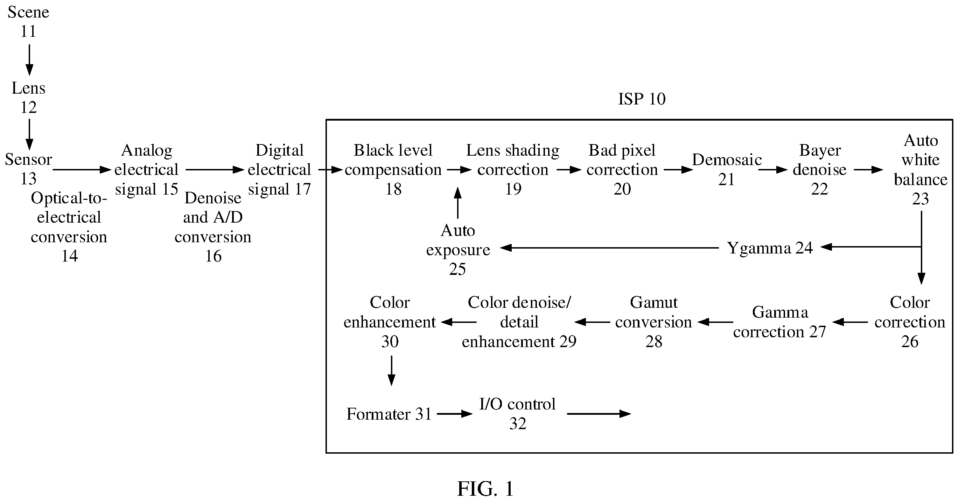

FIG. 1 is an example diagram of a processing procedure of an ISP. As shown in FIG. 1, an optical image of a natural scene 11 is generated by using a lens (lens) 12 and is projected onto an image sensor 13 to obtain a bayer (bayer) image, then an analog electrical signal 15 is obtained through optical-to-electrical conversion 14, and further a digital image signal (namely, a raw image (RAW image)) 17 is obtained through denoise and analog-to-digital conversion (namely, A/D conversion) 16. Then, the digital image signal may enter an image signal processor (image signal processor, ISP) (namely, a digital signal processing chip) 10.

The ISP 10 generally includes modules such as black level compensation (black level compensation, BLC) 18, lens shading correction (lens shading correction) 19, bad pixel correction (bad pixel correction, BPC) 20, demosaic (demosaic) 21, bayer denoise (denoise) 22, auto white balance (auto white balance, AWB) 23, Ygamma 24, auto exposure (auto exposure, AE) 25, auto focus (auto focus, AF) (not shown in FIG. 1), color correction (color correction, CC) 26, gamma (gamma) correction 27, gamut conversion 28, color denoise/detail enhancement 29, color enhancement (color enhancement, CE) 30, an encoder (formater) 31, and input/output (input/output, I/O) control 32.

It is clear that the ISP 10 is a set of complex image processing algorithms. In practice, each independent algorithm needs to adapt to different weather and different scenarios, resulting in high complexity of the algorithm and a large quantity of debugging parameters. Generally, to implement a function, a plurality of algorithms are required to interact with each other, which requires an optimization person to be highly-skilled.

Based on the foregoing problem, this application provides an image processing method. A convolutional neural network model is mainly used to replace the ISP in an existing solution for processing a current RAW image frame, so that complexity of an algorithm in an image processing procedure is reduced. In addition, in the image processing procedure, a local feature and a global feature of the current RAW image frame are determined based on context feature information, so that accuracy of determining the local feature and the global feature is improved. This can improve quality of a final image.

The image processing method provided in embodiments of this application can be applied to the fields related to camera vision, such as autonomous driving, intelligent security, machine recognition, and a mobile phone.

A large quantity of neural networks are used in embodiments of this application. Therefore, for ease of understanding, the following first describes terms and concepts related to the neural networks that may be used in embodiments of this application.

(1) Neural network

The neural network may include a neuron. The neuron may be an operation unit that uses $x_s$ and an intercept of 1 as inputs. An output of the operation unit may be as follows:

$$h_{W,b}\left(x\right) = f\left(W^T x\right) = f(\sum_{s=1}^{n} W_s x_s + b) \quad (1\text{-}1)$$

Herein, s equals to 1, 2, ..., and n, where n is a natural number greater than 1, $W_s$ is a weight of $x_s$, b is a bias of the neuron, f is an activation function (activation function) of the neuron, which is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of one neuron may be an input of another neuron. An input of each neuron may be connected to a local receptive field of a previous layer to extract a feature of the local receptive field. The local receptive field may be an area including several neurons.

(2) Deep neural network

The deep neural network (deep neural network, DNN) is also referred to as a multi-layer neural network, and may be understood as a neural network having a plurality of hidden layers. The DNN is divided based on locations of different layers, and a neural network in the DNN may be divided into three types: an input layer, hidden layers, and an output layer. Generally, the first layer is the input layer, the last layer is the output layer, and middle layers are the hidden layers. Layers are fully connected. To be specific, any neuron at an $i^{th}$ layer is necessarily connected to any neuron at an $(i+1)^{th}$ layer.

Although the DNN seems complex, it is not complex in terms of work at each layer. Simply, the DNN is represented as the following linear relationship expression: $\vec{y} = \alpha(W\vec{x}+\vec{b})$. Herein, $\vec{x}$ is an input vector, y is an output vector, b is an offset vector, W is a weight matrix (also referred to as a coefficient), and $\alpha($ ) is an activation function. At each layer, the output vector y is obtained by performing such a simple operation on the input vector $\vec{x}$. Because there are many layers in the DNN, there are also many coefficients W and offset vectors $\vec{b}$. Definitions of these parameters in the DNN are as follows. The coefficient W is used as an example. It is assumed that in a DNN having three layers, a linear coefficient from a fourth neuron at a second layer to a second neuron at a third layer is defined as $W_{24}^{3}$. The superscript 3 indicates a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter W at the input layer. In the deep neural network, a larger quantity of hidden layers indicates a better capability of the network to describe a complex case in the real world. Theoretically, a model with more parameters has higher complexity and a larger "capacity", which indicates that the model can complete a more complex learning task. A process of training the deep neural network is a process of learning a weight matrix, and a final objective of training is to obtain weight matrices (weight matrices formed by vectors W at many layers) of all layers of a trained deep neural network.

(3) Convolutional neural network

The convolutional neural network (convolutional neuron network, CNN) is a deep neural network with a convolutional structure. The convolutional neural network includes a feature extractor including a convolutional layer and a sub-sampling layer. The feature extractor may be considered as a filter. A convolution process may be considered as performing convolution on an input image or a convolutional feature map (feature map) by using a trainable filter. The convolutional layer is a neuron layer that is in the convolutional neural network and at which convolution processing is performed on an input signal At the convolutional layer of the convolutional neural network, one neuron may be connected only to some adjacent-layer neurons. One convolutional layer usually includes several feature maps, and each feature map may include some neurons in a rectangular arrangement. Neurons in a same feature plane share a weight, and the shared weight herein is a convolution kernel. Weight sharing may be understood as that an image information extraction manner is irrelevant to a location. A principle implied herein is that statistical information of a part of an image is the same as that of another part. This means that image information learned in a part can also be used in another part. Therefore, the same image information obtained through learning can be used for all locations on the image. At a same convolutional layer, a plurality of convolution kernels may be used to extract different image information. Usually, a larger quantity of convolution kernels indicates richer image information reflected in a convolution operation.

The convolution kernel may be initialized in a form of a matrix of a random size. In a process of training the convolutional neural network, an appropriate weight may be obtained for the convolution kernel through learning. In addition, benefits directly brought by weight sharing are that connections between layers of the convolutional neural network are reduced, and an overfitting risk is reduced.

(4) Loss function

In a process of training a deep neural network, because it is expected that output of the deep neural network is as close as possible to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to lower the predicted value until the deep neural network can predict the actually expected target value or a value that more approximates the actually desired target value. Therefore, "How to obtain, through comparison, the difference between the predicted value and the target value" needs to be predefined. This is the loss function (loss function) or an objective function (objective function). The loss function and the objective function are important equations that measure the difference between the predicted value and the target value. The loss function is used as an example. A larger output value (loss) of the loss function indicates a larger difference, and therefore training of the deep neural network is a process of minimizing the loss as much as possible. Generally, a smaller loss indicates higher quality of training the deep neural network, and a larger loss indicates lower quality of training the deep neural network. Similarly, smaller loss fluctuation indicates more stable training; and larger loss fluctuation indicates more unstable training.

(5) Back propagation algorithm

A neural network may correct a value of a parameter in an initial model in a training process according to an error back propagation (back propagation, BP) algorithm, so that a reconstruction error loss of the model becomes smaller. Specifically, an input signal is transferred forward until an error loss occurs at output, and the parameter in the initial super-resolution model is updated based on back propagation error loss information, to make the error loss converge. The back propagation algorithm is an error-loss-centered back propagation motion intended to obtain a parameter, for example, a weight matrix, of an optimal super-resolution model.

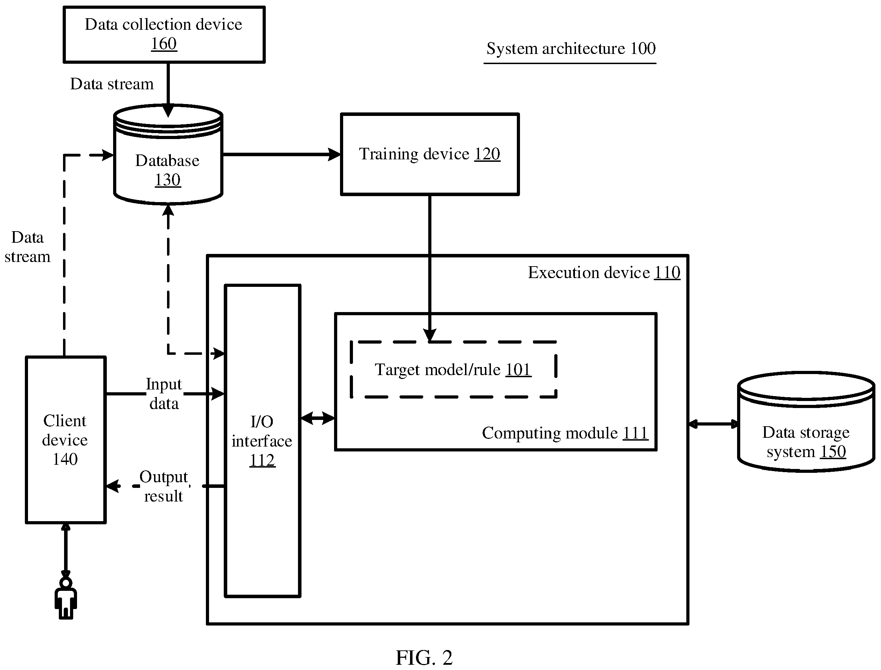

FIG. 2 shows a system architecture 100 according to an embodiment of this application. In FIG. 2, a data collection device 160 is configured to collect training data. For this application, the training data is mainly image data.

After collecting the training data, the data collection device 160 stores the training data in a database 130, and a training device 120 obtains a target model/rule 101 through training based on the training data maintained in the database 130.

The following describes a process in which the training device 120 obtains the target model/rule 101 based on the training data. The training device 120 processes an input raw image, and compares an output value with a target value until a difference between the value output by the training device 120 and the target value is less than a specific threshold. In this way, training of the target model/rule 101 is completed.

The target model/rule 101 can be used for implementing the image processing method in embodiments of this application. The target model/rule 101 in this embodiment of this application may be specifically a neural network model, and may be specifically a convolutional neural network model or the like. It should be noted that, in an actual application, the training data maintained in the database 130 is not necessarily all collected by the data collection device 160, but may be received from another device. It should further be noted that the training device 120 may not necessarily train the target model/rule 101 completely based on the training data maintained in the database 130, but may obtain training data from a cloud or another place to perform model training. The foregoing descriptions should not be construed as a limitation on embodiments of this application.

The target model/rule 101 obtained through training by the training device 120 may be applied to different systems or devices, for example, applied to an execution device 110 shown in FIG. 2. The execution device 110 may be a terminal, for example, a mobile phone terminal, a tablet computer, a notebook computer, augmented reality (augmented reality, AR) AR/virtual reality (virtual reality, VR), or a vehicle-mounted terminal; or may be a server, a cloud, or the like. In FIG. 2, an input/output (input/output, I/O) interface 112 is configured in the execution device 110, and is configured to exchange data with an external device. A user may input data to the I/O interface 112 by using a client device 140. The input data in this embodiment of this application may include a to-be-processed image (namely, a RAW image) captured by a camera.

In a process in which the execution device 110 preprocesses the input data, or a computing module 111 of the execution device 110 performs processing related to computing or the like, the execution device 110 may invoke data, code, and the like in a data storage system 150 for corresponding processing, and may further store, in the data storage system 150, data, instructions, and the like that are obtained through the corresponding processing.

Finally, the I/O interface 112 returns a processing result, for example, the foregoing obtained image processing result, to the client device 140, to provide the processing result for the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

In a case shown in FIG. 2, the user may manually specify the input data, and the manual specifying may be operated on an interface provided by the I/O interface 112. In another case, the client device 140 may automatically send input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner, for example, display, sound, or an action. The client device 140 may alternatively serve as a data collection end to collect, as new sample data, the input data that is input to the I/O interface 112 and the output result that is output from the I/O interface 112 that are shown in the figure, and store the new sample data in the database 130. Certainly, the client device 140 may alternatively not perform collection. Instead, the I/O interface 112 directly stores, in the database 130 as new sample data, the input data that is input to the I/O interface 112 and the output result that is output from the I/O interface 112 that are shown in the figure.

It should be noted that FIG. 2 is merely a schematic diagram of a system architecture according to this embodiment of this application. A location relationship between a device, a component, a module, and the like shown in the figure constitutes no limitation. For example, in FIG. 2, the data storage system 150 is an external memory relative to the execution device 110. In another case, the data storage system 150 may alternatively be disposed in the execution device 110.

As shown in FIG. 2, the target model/rule 101 is obtained through training by the training device 120. The target model/rule 101 in this embodiment of this application may be an image processing apparatus in this application. Specifically, the image processing apparatus provided in embodiments of this application may be a CNN or the like.

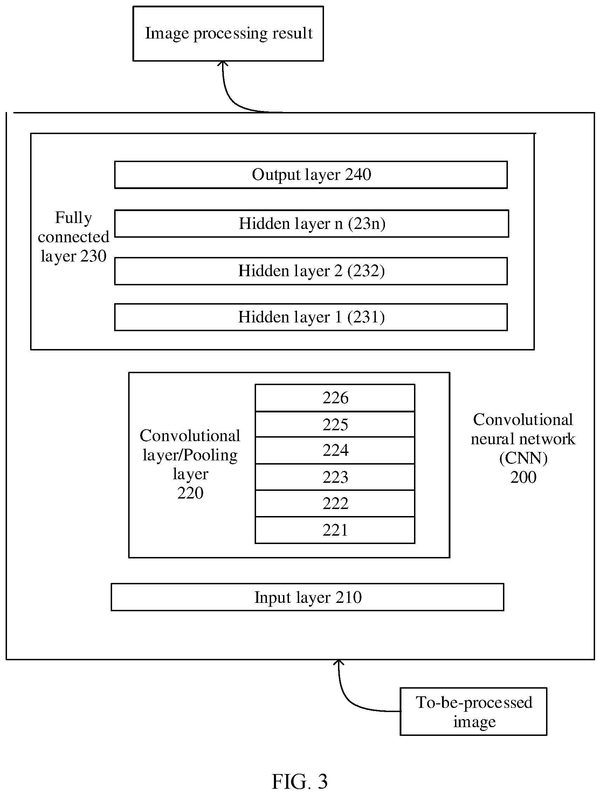

Because the CNN is a very common neural network, a structure of the CNN is described below in detail with reference to FIG. 3. As described in the foregoing basic concept introductions, the convolutional neural network is a deep neural network with a convolutional structure, and is a deep learning (deep learning) architecture. In the deep learning architecture, multi-layer learning is performed at different abstract levels according to a neural network model update algorithm. As a deep learning architecture, the CNN is a feed-forward (feed-forward) artificial neural network. Neurons in the feed-forward artificial neural network may make response to an image input into the feed-forward artificial neural network.

A structure of a neural network specifically used in the image processing method in embodiments of this application may be shown in FIG. 3. In FIG. 3, a convolutional neural network (CNN) 200 may include an input layer 210, a convolutional layer/pooling layer 220 (where the pooling layer is optional), and a fully connected layer (fully connected layer) 230. The input layer 210 may obtain the to-be-processed image, and send the obtained to-be-processed image to the convolutional layer/pooling layer 220 and the subsequent fully connected layer 230 for processing, to obtain a processing result of the image. The following describes in detail structures of the layers in the CNN 200 in FIG. 3.

Convolutional layer/Pooling layer 220:

Convolutional layer:

As shown in FIG. 3, the convolutional layer/pooling layer 220 may include, for example, layers 221 to 226. For example, in an implementation, the layer 221 is a convolutional layer, the layer 222 is a pooling layer, the layer 223 is a convolutional layer, the layer 224 is a pooling layer, the layer 225 is a convolutional layer, and the layer 226 is a pooling layer. In another implementation, the layers 221 and 222 are convolutional layers, the layer 223 is a pooling layer, the layers 224 and 225 are convolutional layers, and the layer 226 is a pooling layer. That is, an output of the convolutional layer may be used as an input of a subsequent pooling layer, or may be used as an input of another convolutional layer to continue a convolution operation.

The following describes an internal working principle of a convolutional layer by using the convolutional layer 221 as an example.

The convolutional layer 221 may include a plurality of convolution operators. The convolution operator is also referred to as a kernel. In image processing, the convolution operator functions as a filter that extracts specific information from a matrix of an input image. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride (stride)) in a horizontal direction on the input image, to extract specific features from the image. A size of the weight matrix should be related to a size of the image. It should be noted that a depth dimension (depth dimension) of the weight matrix is the same as a depth dimension of the input image. In a convolution operation process, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows $\times$ columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and a further weight matrix is used to blur unnecessary noise in the image. The plurality of weight matrices have a same size (rows $\times$ columns), and convolutional feature maps extracted from the plurality of weight matrices with the same size have a same size. Then, the plurality of extracted convolutional feature maps with the same size are combined to form an output of the convolution operation.

Weight values in these weight matrices need to be obtained through a large amount of training in an actual application. Each weight matrix formed by using the weight values obtained through training may be used to extract information from an input image, so that the convolutional neural network 200 performs correct prediction.

When the convolutional neural network 200 has a plurality of convolutional layers, a relatively large quantity of general features are usually extracted at a shallow convolutional layer (for example, 221). The general feature may also be referred to as a low-level feature. As a depth of the convolutional neural network 200 increases, a feature extracted at a subsequent convolutional layer (for example, 226) becomes more complex, for example, a high-level semantic feature. A feature with higher semantics is more applicable to a to-be-resolved problem.

Pooling layer:

A quantity of training parameters usually needs to be reduced. Therefore, the pooling layer usually needs to be periodically introduced after a convolutional layer. For the layers 221 to 226 in the layer 220 shown in FIG. 3, one convolutional layer may be followed by one pooling layer, or a plurality of convolutional layers may be followed by one or more pooling layers. In an image processing procedure, a sole purpose of the pooling layer is to reduce a space size of an image. The pooling layer may include an average pooling operator and/or a maximum pooling operator, to perform sampling on an input image to obtain an image with a small size. The average pooling operator may be used to calculate pixel values in an image within a specific range, to generate an average value as an average pooling result. The maximum pooling operator may be used to select a pixel with a maximum value within a specific range as a maximum pooling result. In addition, similar to a case in which a size of a weight matrix in the convolutional layer should be related to a size of the image, an operator at the pooling layer should be also related to the size of the image. A size of a processed image output from the pooling layer may be less than a size of an image input to the pooling layer. Each pixel in the image output from the pooling layer represents an average value or a maximum value of a corresponding sub-area of the image input to the pooling layer.

Fully connected layer 230:

After processing performed at the convolutional layer/pooling layer 220, the convolutional neural network 200 still cannot output required output information. As described above, at the convolutional layer/pooling layer 220, only feature extraction is performed, and parameters brought by the input image are reduced. However, to generate final output information (required class information or other related information), the convolutional neural network 200 needs to use the fully connected layer 230 to generate an output of one required class or outputs of a group of required classes. Therefore, the fully connected layer 230 may include a plurality of hidden layers (231 and 232 to 23n as shown in FIG. 3) and an output layer 240. Parameters included in the plurality of hidden layers may be obtained through pre-training based on related training data of a specific task type. For example, the task type may include image processing, image recognition, image classification, super-resolution image reconstruction, and the like.

At the fully connected layer 230, the plurality of hidden layers are followed by the output layer 240, namely, a last layer of the entire convolutional neural network 200. The output layer 240 has a loss function similar to a categorical cross entropy, and the loss function is specifically used to calculate a prediction error. Once forward propagation (for example, propagation in a direction from 210 to 240 in FIG. 3) of the entire convolutional neural network 200 is completed, back propagation (for example, propagation in a direction from 240 to 210 in FIG. 3) is started to update a weight value and a deviation of each layer mentioned above, to reduce a loss of the convolutional neural network 200 and an error between a result output by the convolutional neural network 200 through an output layer and an ideal result.

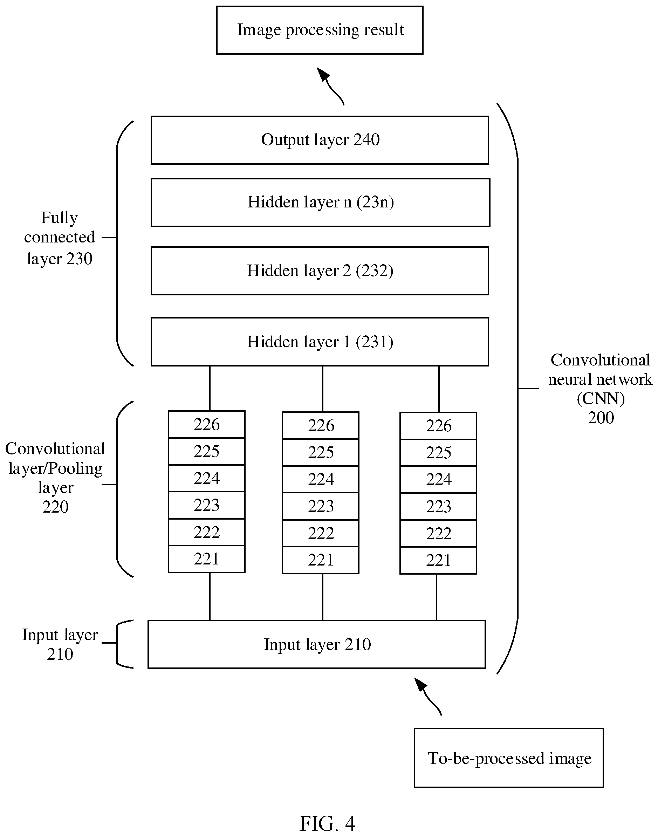

A structure of a neural network specifically used in the image processing method in embodiments of this application may be shown in FIG. 4. In FIG. 4, a convolutional neural network (CNN) 200 may include an input layer 210, a convolutional layer/pooling layer 220 (where the pooling layer is optional), and a fully connected layer 230. Compared with FIG. 3, in FIG. 4, at the convolutional layer/pooling layer 220, a plurality of convolutional layers/pooling layers are in parallel, and extracted features are all input to the fully connected layer 230 for processing.

It should be noted that the convolutional neural network shown in FIG. 3 and the convolutional neural network shown in FIG. 4 are merely examples of two possible convolutional neural networks used in the image processing method in embodiments of this application. In a specific application, the convolutional neural network used in the image processing method in embodiments of this application may alternatively exist in a form of another network model.

In addition, a structure of a convolutional neural network obtained by using the neural network structure search method in this embodiment of this application may be shown in the structure of the convolutional neural network in FIG. 3 and the structure of the convolutional neural network in FIG. 4.

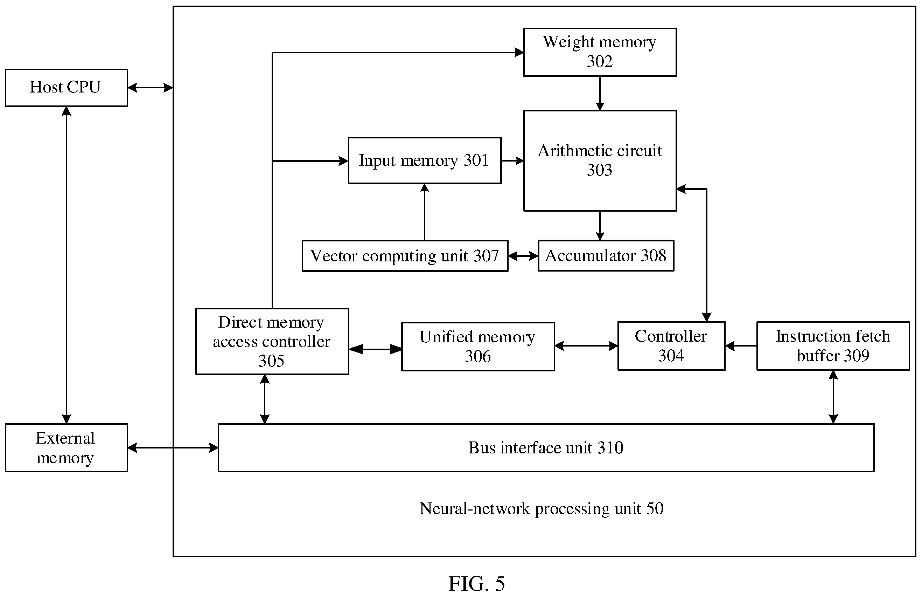

FIG. 5 shows a hardware structure of a chip according to an embodiment of this application. The chip includes a neural-network processing unit 50. The chip may be disposed in the execution device 110 shown in FIG. 2, and is configured to complete computing work of the computing module 111. Alternatively, the chip may be disposed in the training device 120 shown in FIG. 2, to complete training work of the training device 120 and output the target model/rule 101. Algorithms at all layers of the convolutional neural network shown in FIG. 3 or FIG. 4 may be implemented in the chip shown in FIG. 5.

The neural-network processing unit NPU 50 serves as a coprocessor, and is mounted on a host central processing unit (central processing unit, CPU) (host CPU). The host CPU assigns a task. A core part of the NPU is an arithmetic circuit 303. A controller 304 controls the arithmetic circuit 303 to extract data from a memory (a weight memory or an input memory) and perform an arithmetic operation.

In some implementations, the arithmetic circuit 303 includes a plurality of processing elements (process engines, PEs). In some implementations, the arithmetic circuit 303 is a two-dimensional systolic array. Alternatively, the arithmetic circuit 303 may be a one-dimensional systolic array or another electronic circuit that can perform mathematical operations such as multiplication and addition. In some implementations, the arithmetic circuit 303 is a general-purpose matrix processor.

For example, it is assumed that there is an input matrix A, a weight matrix B, and an output matrix C. The arithmetic circuit fetches, from a weight memory 302, data corresponding to the matrix B, and caches the data on each PE in the arithmetic circuit. The arithmetic circuit fetches, from an input memory 301, data corresponding to the matrix A, performs a matrix operation on the matrix B, and stores, in an accumulator (accumulator) 308, an obtained partial result or an obtained final result of the matrix.

A vector computing unit 307 may further process an output of the arithmetic circuit, for example, vector multiplication, vector addition, an exponential operation, a logarithm operation, or value comparison. For example, the vector computing unit 307 may be configured to perform network computing, such as pooling (pooling), batch normalization (batch normalization, BN), or local response normalization (local response normalization), at a non-convolutional/non-FC layer of a neural network.

In some implementations, the vector computing unit 307 can store, in a unified memory 306, an output vector that is processed. For example, the vector computing unit 307 may apply a non-linear function to an output of the arithmetic circuit 303, for example, a vector of an accumulated value, to generate an activation value. In some implementations, the vector computing unit 307 generates a normalized value, a combined value, or both a normalized value and a combined value. In some implementations, the output vector that is processed can be used as an activation input for the arithmetic circuit 303, for example, can be used at a subsequent layer of the neural network.

The unified memory 306 is configured to store input data and output data.

For weight data, a direct memory access controller (direct memory access controller, DMAC) 305 transfers input data in an external memory to the input memory 301 and/or the unified memory 306, stores, into the weight memory 302, weight data in the external memory, and stores data in the unified memory 306 into the external memory.

A bus interface unit (bus interface unit, BIU) 310 is configured to implement interaction between the host CPU, the DMAC, and an instruction fetch buffer 309 through a bus.

The instruction fetch buffer (instruction fetch buffer) 309 connected to the controller 304 is configured to store instructions used by the controller 304.

The controller 304 is configured to invoke the instructions cached in the instruction fetch buffer 309, to control a working process of an operation accelerator.

Usually, the unified memory 306, the input memory 301, the weight memory 302, and the instruction fetch buffer 309 are all on-chip (On-Chip) memories. The external memory is a memory outside the NPU, and the external memory may be a double data rate synchronous dynamic random access memory (double data rate synchronous dynamic random access memory, DDR SDRAM), a high bandwidth memory (high bandwidth memory, HBM), or another readable and writable memory.

An operation at each layer of the convolutional neural network shown in FIG. 3 or FIG. 4 may be performed by the arithmetic circuit 303 or the vector computing unit 307.

The execution device 110 in FIG. 2 described above can perform steps of the image processing method in embodiments of this application. The CNN model shown in FIG. 3, the CNN model shown in FIG. 4, and the chip shown in FIG. 5 may also be configured to perform the steps of the image processing method in embodiments of this application.

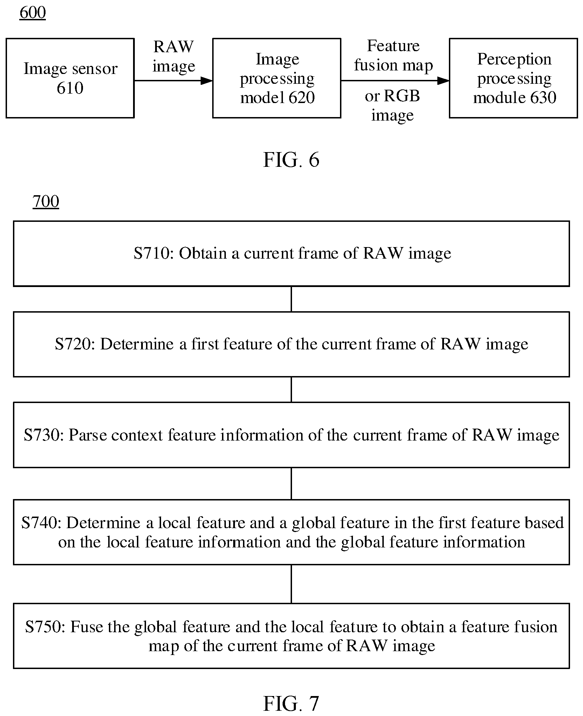

FIG. 6 is an example diagram of a system architecture for image processing according to an embodiment of this application. As shown in FIG. 6, the system architecture 600 includes an image sensor 610 and an image processing model 620.

The image sensor 610 is configured to convert an obtained optical image into a digital image signal, namely, a RAW image.

The image processing model 620 is used to process, according to an image processing method 700 provided below, the RAW image obtained by the image sensor 610, and output a feature fusion map or an RGB image. The image processing model 620 may be a neural network model, for example, a convolutional neural network model. This is not limited in this application. For ease of description, descriptions are provided below by using a convolutional neural network model as an example.

Optionally, the system architecture 600 may further include a perception processing module 630. The perception processing module 630 is configured to perform perception processing such as image recognition, detection, and segmentation on the feature fusion map or the RGB image output by the image processing model 620.

FIG. 7 is an example diagram of an image processing method according to an embodiment of this application. It should be understood that the image processing method 700 may be applied to the image processing model 620, and may be specifically applied to a convolutional neural network model. As shown in FIG. 7, the image processing method 700 includes step S710 to step S750. It should be understood that a sequence of the steps is not limited in embodiments of this application, and any solution in this application that can be implemented in any sequence of the steps shall fall within the protection scope of this application. These steps are described in detail below.

S710: Obtain a current RAW image frame.

It should be understood that the RAW image is raw data obtained by converting a captured light source signal into a digital signal by a complementary metal-oxide-semiconductor (complementary metal-oxide-semiconductor, CMOS) image sensor or a charge-coupled device (charge-coupled device, CCD) image sensor, and is lossless. Therefore, the RAW image includes original information of an object. An input of a neural network model is the RAW image, so that image information can be retained to a maximum extent. In an actual application, the RAW image may be obtained by an image capture device (for example, a lens and a sensor), or may be received from another device. This is not specifically limited in embodiments of this application. In addition, in practice, the input of the neural network may alternatively be other image data, an image signal, or the like. This is not limited in this application.

S720: Determine a first feature of the current RAW image frame.

Before the first feature of the current RAW image frame is determined, a feature may be first extracted from the current RAW image frame. It should be understood that a process of extracting the feature in this application may be implemented by using the convolutional neural network model, and may be specifically implemented by using a convolutional layer (for example, the convolutional layer 221) of the convolutional neural network model.

Optionally, the feature may be at least one of a color feature, a brightness feature, a texture feature, an edge feature, a shape feature, a spatial relationship feature, and the like of the image. It should be understood that the feature is usually represented by a feature vector. If the image has only one feature, the feature vector is a one-dimensional vector; or if the image is a combination of n features, the feature vector is an n-dimensional feature vector.

Optionally, in an implementation, the feature (namely, a third feature in the following) extracted from the current RAW image frame may be directly used as the first feature of the current RAW image frame.

In another implementation, the feature extracted from the current RAW image frame may alternatively be corrected, to obtain the first feature of the current RAW image frame. It should be understood that a manner of correcting the feature extracted from the current RAW image frame is not limited in this application.

Optionally, the feature extracted from the current RAW image frame may be corrected based on a feature extracted from a previous frame of image, to obtain the first feature of the current RAW image frame. This can avoid a flicker problem caused by an inconsistent image time sequence.

Optionally, the previous frame of image may be a RAW image, or may be an image on which correction or other processing is performed. This is not limited in this application. However, for ease of description, descriptions are provided below by using the previous RAW image frame as an example.

Optionally, the feature extracted from the current frame may be corrected based on a feature extracted from another frame of image. This is not limited. For ease of description, descriptions are provided below by using a previous frame as an example.

Optionally, a previous RAW image frame may be first obtained, and a second feature of the previous RAW image frame is extracted. In addition, a third feature of the current RAW image frame is extracted. Then, the first feature of the current RAW image frame is determined based on the second feature and the third feature that are respectively extracted from the previous RAW image frame and the current RAW image frame. In other words, the third feature extracted from the current RAW image frame is corrected based on the second feature extracted from the previous RAW image frame, to determine the first feature of the current RAW image frame. A manner of correcting, based on the second feature extracted from the previous RAW image frame, the third feature extracted from the current RAW image frame is not limited in this application.

It should be understood that, because a frame rate of a camera is high and usually is 33 frames per second, there is a large coincided-scene area of two consecutive frames of images or even a plurality of consecutive frames of images. Therefore, optionally, in practice, the current RAW image frame may be corrected based on one or more other frames of RAW images having a coincided-scene area. It should be understood that a coincided-scene area means that a same area location in different images corresponds to a same scene. The scene may be a natural scene, an object, a person, an animal, or the like. This is not limited.

Based on this, the determining the first feature of the current RAW image frame based on the second feature and the third feature may include: determining a coincided-scene area of the previous RAW image frame and the current RAW image frame; determining, based on the coincided-scene area, a fourth feature that is in the second feature and that corresponds to the coincided-scene area; determining, based on the coincided-scene area, a fifth feature that is in the third feature and that corresponds to the coincided-scene area; and determining the first feature of the current RAW image frame based on a difference between the fourth feature and the fifth feature.

It should be understood that determining the fourth feature that is in the second feature and that corresponds to the coincided-scene area is determining a feature that is located in the coincided-scene area and that is in the feature extracted from the previous RAW image frame. Similarly, determining the fifth feature that is in the third feature and that corresponds to the coincided-scene area is determining a feature that is located in the coincided-scene area and that is in the feature extracted from the current RAW image frame.

Optionally, in practice, the coincided-scene area of the previous RAW image frame and the current RAW image frame may be alternatively first determined, and then only a feature in the coincided-scene area of the previous RAW image frame is extracted. Further, a feature in the coincided-scene area of the current RAW image frame is corrected based on the feature extracted from the coincided-scene area of the previous RAW image frame. This is not limited in this application.

It should be understood that the determining the first feature of the current RAW image frame based on the difference between the fourth feature and the fifth feature specifically includes: correcting the feature in the coincided-scene area of the current RAW image frame based on the difference between the fourth feature and the fifth feature; and then determining the first feature of the current RAW image frame based on a corrected feature in the coincided-scene area of the current RAW image frame and a feature in another non-coincided-scene area.

Optionally, if the difference between the fourth feature and the fifth feature is less than or equal to a first threshold, the first feature of the current RAW image frame may be directly determined based on the fifth feature. In other words, the feature in the coincided-scene area of the current RAW image frame does not need to be corrected.

Optionally, if the difference between the fourth feature and the fifth feature is greater than a first threshold and less than a second threshold, the first feature of the current RAW image frame may be determined based on the fourth feature and the fifth feature. To be specific, the fifth feature in the coincided-scene area of the current RAW image frame is corrected based on the fourth feature and the fifth feature; and then the first feature of the current RAW image frame is determined based on a corrected feature in the coincided-scene area and the feature in another non-coincided-scene area. Optionally, the fifth feature in the coincided-scene area of the current RAW image frame may be corrected based on an average value of the fourth feature and the fifth feature, or may be determined based on another proportion. This is not limited.

Optionally, if the difference between the fourth feature and the fifth feature is greater than or equal to a second threshold, the first feature of the current RAW image frame may be determined based on the fourth feature. To be specific, the fifth feature in the coincided-scene area of the current RAW image frame is corrected based on the fourth feature (in other words, the fifth feature in the coincided-scene area of the current RAW image frame is replaced with the fourth feature), and then the first feature of the current RAW image frame is determined based on a corrected feature in the coincided-scene area and the feature in another non-coincided-scene area.

In this embodiment of this application, the first feature of the current RAW image frame is determined based on a difference between features corresponding to the coincided-scene area of two consecutive frames of images, so that the difference in the same scene area of the two consecutive frames of images falls within an appropriate range. This can ensure that the determined first feature of the current RAW image frame is robust, so that time sequence consistency in brightness and color of a video is ensured, and a flicker phenomenon is avoided.

Optionally, a resolution of the previous RAW image frame may be half of a resolution of the current RAW image frame, or may be the same as a resolution of the current RAW image frame, or may be another proportion of a resolution of the current RAW image frame. This is not limited in this application.

In this embodiment of this application, the resolution of the previous RAW image frame is set to be half of the resolution of the current RAW image frame. This can reduce a processing amount of an image processing model, and further reduce a requirement on computing power.

Optionally, a same weight coefficient is used to extract the third feature of the current RAW image frame and the second feature of the previous RAW image frame. In this way, in the convolutional neural network model, features of the two frames of images can be extracted through weight value sharing. In other words, the features of the two frames of images are extracted by using a weight matrix. In this case, features corresponding to the coincided-scene area of the two frames of images can be compared more intuitively, so that accuracy of processing data is improved. In addition, a quantity of network parameters that need to be stored in the convolutional neural network model can be further reduced. It should be further understood that, for a related concept of a weight, refer to the descriptions in the foregoing convolutional layer 221. Details are not described again.

S730: Parse context feature information of the current RAW image frame, where the context feature information includes local feature information and global feature information.

Optionally, the context feature information of the current RAW image frame may be parsed by a context encoder.

Optionally, the context encoder may be trained by using a pixel reconstruction loss (namely, an L2 loss) and a generative adversarial network (generative adversarial network, GAN) adversarial loss. In this way, the context encoder can learn an appearance of a visual structure and semantic information of an image. The appearance of the visual structure corresponds to a global feature, mainly including global brightness, white balance, color, and contrast. The semantic information is mainly a local feature, including texture details (such as sharpness and noise), local contrast, and the like. It should be understood that, for training of the context encoder, refer to the related conventional technology. Details are not described again.

It should be understood that the context encoder is trained to generate context feature information of any image area based on an ambient environment. To be specific, the context encoder receives data around an image area, and attempts to generate data that is appropriate for the image area.

Based on this, the context feature information of the current RAW image frame is parsed, and then the local feature information and the global feature information that correspond to the current RAW image frame can be determined.

S740: Determine a local feature and a global feature in the first feature based on the local feature information and the global feature information.

As mentioned above, the global feature information and the local feature information of the current RAW image frame can be learned by parsing the context feature information, and then the global feature and the local feature in the first feature can be distinguished based on the information. In other words, the context feature information can guide generation of the global features and the local feature.

Optionally, the global feature may include at least one of global brightness, white balance, color, and contrast, and the local feature may include at least one of local texture details and local contrast.

In this embodiment of this application, the local feature and the global feature in the first feature are determined based on the context feature information, so that accuracy of determining the local feature and the global feature is improved.

S750: Fuse the global feature and the local feature to obtain a feature fusion map of the current RAW image frame.

Optionally, in this application, feature fusion may be implemented by using a fusion policy of add and concat. Specifically, feature maps (namely, a global feature map and a local feature map) of different sizes (namely, different resolutions) may be first fused by performing a concat operation, and then after the concat operation is performed, information about the global feature map and information about the local feature map are superimposed by performing an add operation.

It should be understood that the concat operation is an increase in a quantity of channels. To be specific, a quantity of features (a quantity of channels) for describing an image increases, but information about the features does not increase, namely, horizontal or vertical spatial superposition. The add operation is a simple pixel superposition. This means that an amount of information about a feature for describing an image increases, but a dimension for describing the image does not increase, and only an amount of information in each dimension increases.

It should be understood that, in practice, feature fusion may alternatively be implemented by using another fusion policy. This is not limited in this application.

Optionally, the method 700 may further include: generating an RGB image based on the feature fusion map.

In this embodiment of this application, the convolutional neural network model is mainly used to replace ISP in an existing solution for processing the current RAW image frame, so that complexity of an algorithm in an image processing procedure is reduced. In addition, in the image processing procedure, the local feature and the global feature of the current RAW image frame are determined based on the context feature information, so that accuracy of determining the local feature and the global feature is improved. In this way, the local feature and the global feature can be separately highlighted in a decoding process. This can improve quality of a final image.

Optionally, after the feature fusion map of the current RAW image frame is obtained, the feature fusion map may be directly sent to a perception processing module; or after the RGB image is generated, the RGB image may be sent to a perception processing module.

In this embodiment of this application, the obtained feature fusion map may be directly sent to the perception processing module. This can reduce a requirement of the perception processing module on computing power.

Optionally, the generated RGB image may be evaluated, and the foregoing convolutional neural network model is optimized based on an evaluation result.

Optionally, the generated RGB image may be evaluated by using an evaluation model.

Optionally, an evaluation model used for evaluation may be pre-trained by using a sample RGB image training set. The evaluation model may be a neural network model. The model may be used to evaluate the RGB image generated by using the convolutional neural network model. In addition, the evaluation result can promote continuous optimization of the convolutional neural network model. In this way, an image output by the convolutional neural network model is more beneficial to a perception algorithm, so that precision of perception processing is improved.

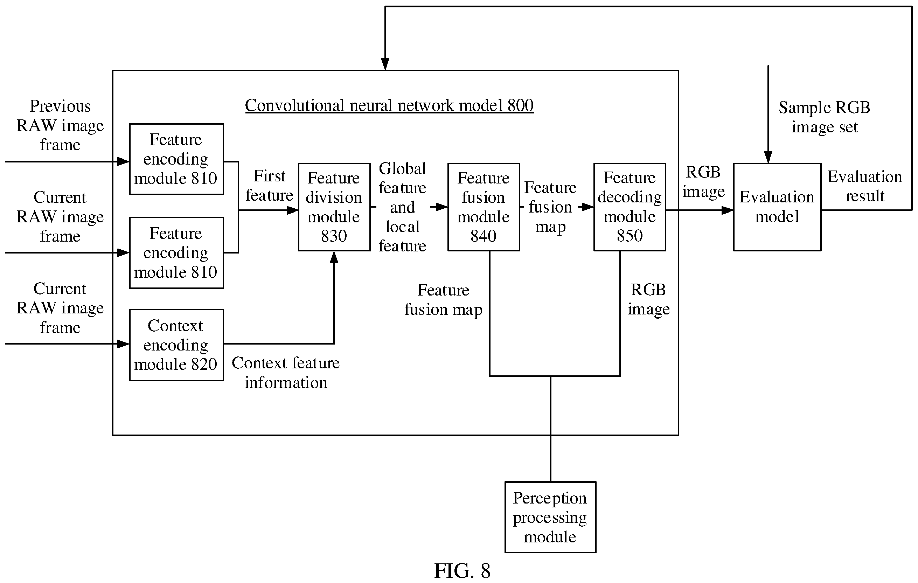

FIG. 8 is an example diagram of a system architecture of a convolutional neural network model according to an embodiment of this application. As shown in FIG. 8, the convolutional neural network model 800 includes a feature encoding module 810, a context encoding module 820, a feature division module 830, and a feature fusion module 840.

The feature encoding module 810 is configured to perform feature encoding on a current RAW image frame and a previous RAW image frame, namely, perform feature extraction. The feature encoding module 810 may extract feature information of two consecutive frames by using a multi-resolution framework through weight value sharing. To be specific, the feature encoding module 810 may extract features of the two consecutive RAW image frames with different resolutions, and a same weight value may be used for the two consecutive frames of RAW images in an extraction process.

Optionally, in a training process, the feature encoding module 810 may use an implicit regularization form, for example, a batch stochastic gradient descent algorithm. In the batch stochastic gradient descent algorithm, a plurality of samples are used to update a parameter in each iteration, so that a speed of training a model is accelerated.

Optionally, the convolutional neural network model 800 may further include a matching and correction module, configured to: after the feature encoding module 810 extracts the features of the two consecutive frames, perform matching on the features in a coincided-scene area of the two consecutive frames, and correct a feature of the current frame based on a matching result, to determine a first feature of the current frame.

The context encoding module 820 is configured to parse context feature information of the current RAW image frame, to determine global feature information and local feature information of the current RAW image frame. For details, refer to the foregoing descriptions.

The feature division module 830 is configured to divide the determined first feature of the current frame into a global feature and a local feature based on the context feature information.

The feature fusion module 840 is configured to: fuse the global feature and the local feature, to generate a feature fusion map. It should be understood that the feature fusion map may be directly used as an input of a perception processing module.

Optionally, the convolutional neural network model 800 may further include a feature decoding module 850, configured to decode the feature fusion map output by the feature fusion module 840, to generate an RGB image. It should be understood that the RGB image may also be used as an input of the perception processing module.

Optionally, the RGB image generated by the feature decoding module 850 may be alternatively input to an evaluation model to evaluate the generated RGB image, and an optimization direction of the convolutional neural network model 800 is controlled based on an evaluation result. In this way, the RGB image output by the convolutional neural network model 800 is more beneficial to a perception algorithm, so that precision of the perception algorithm is improved.

Optionally, an evaluation model used for evaluation may be pre-trained by using a sample RGB image training set, and the evaluation model may be a neural network model.

It should be understood that the evaluation model may be a module in the convolutional neural network model 800, or may exist independent of the convolutional neural network model 800. This is not limited in this application.

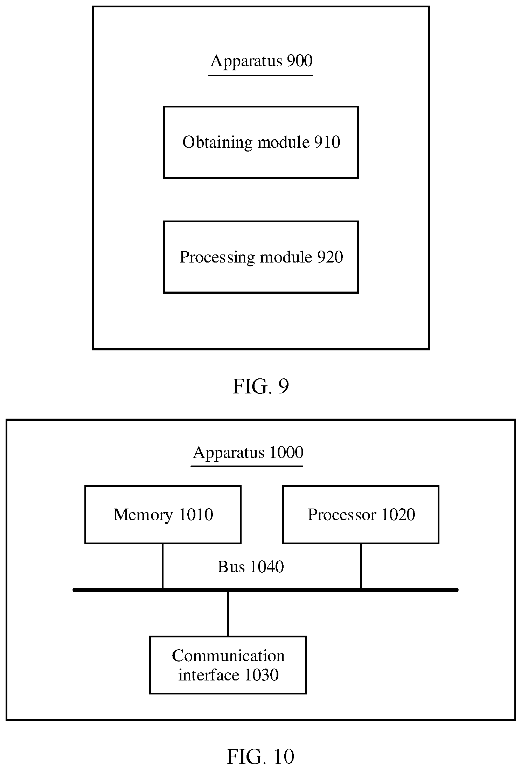

FIG. 9 is an example diagram of an image processing apparatus according to an embodiment of this application. The apparatus 900 is used in a convolutional neural network model. The image processing apparatus 900 includes an obtaining module 910 and a processing module 920.

The obtaining module 910 is configured to obtain a current RAW image frame.

The processing module 920 is configured to: determine a first feature of the current RAW image frame; parse context feature information of the current RAW image frame, where the context feature information includes local feature information and global feature information; determine a local feature and a global feature in the first feature based on the local feature information and the global feature information; and fuse the global feature and the local feature to obtain a feature fusion map of the current RAW image frame.

Optionally, the obtaining module 910 may be further configured to obtain a previous RAW image frame. The processing module 920 may be further configured to: extract a second feature of the previous RAW image frame; extract a third feature of the current RAW image frame; and determine the first feature of the current RAW image frame based on the second feature and the third feature.

Optionally, the processing module 920 may be further configured to: determine a coincided-scene area of the previous RAW image frame and the current RAW image frame; determine, based on the coincided-scene area, a fourth feature that is in the second feature and that corresponds to the coincided-scene area; determine, based on the coincided-scene area, a fifth feature that is in the third feature and that corresponds to the coincided-scene area; and determine the first feature of the current RAW image frame based on a difference between the fourth feature and the fifth feature.

Optionally, the processing module 920 may be further configured to: if the difference between the fourth feature and the fifth feature is less than or equal to a first threshold, determine the first feature of the current RAW image frame based on the fifth feature; if the difference between the fourth feature and the fifth feature is greater than a first threshold and less than a second threshold, determine the first feature of the current RAW image frame based on the fourth feature and the fifth feature; or if the difference between the fourth feature and the fifth feature is greater than or equal to a second threshold, determine the first feature of the current RAW image frame based on the fourth feature.

Optionally, a resolution of the previous RAW image frame may be half of a resolution of the current RAW image frame.

Optionally, a same weight coefficient is used to extract the third feature of the current RAW image frame and the second feature of the previous RAW image frame.

Optionally, the processing module 920 may be further configured to generate an RGB image based on the feature fusion map.

Optionally, the apparatus 900 may further include a sending module, configured to send the feature fusion map or the RGB image to a perception processing module.

Optionally, the processing module 920 may be further configured to: evaluate the generated RGB image; and optimize the convolutional neural network model based on an evaluation result.

Optionally, the global feature may include at least one of global brightness, white balance, color, and contrast, and the local feature may include at least one of local texture details and local contrast.

FIG. 10 is a block diagram of an example of a hardware structure of an apparatus according to an embodiment of this application. Optionally, the apparatus 1000 may be specifically a computer device. The apparatus 1000 includes a memory 1010, a processor 1020, a communication interface 1030, and a bus 1000. The memory 1010, the processor 1020, and the communication interface 1030 are communicatively connected to each other through the bus 1040.

The memory 1010 may be a read-only memory (read-only memory, ROM), a static storage device, a dynamic storage device, or a random access memory (random access memory, RAM). The memory 1010 may store a program. When the program stored in the memory 1010 is executed by the processor 1020, the processor 1020 is configured to perform steps of the image processing method in embodiments of this application.

The processor 1020 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the image processing method in the method embodiment of this application.

Alternatively, the processor 1020 may be an integrated circuit chip and has a signal processing capability. In an implementation process, the image processing method in this application may be completed by using an integrated logic circuit of hardware in the processor 1020 or instructions in a form of software.

The processor 1020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by a combination of hardware and software modules in a decoding processor. A software module may be located in a mature storage medium in the art, for example, a random access memory, a flash memory, a read-only memory, a programmable read-only memory, an electrically erasable programmable memory, or a register. The storage medium is located in the memory 1010. The processor 1020 reads information in the memory 1010, and completes, in combination with hardware in the processor 1020, a function that needs to be executed by a module included in the apparatus in this embodiment of this application, or performs the image processing method in the method embodiment of this application.

The communication interface 1030 uses a transceiver apparatus, for example, but not limited to, a transceiver, to implement communication between the apparatus 1000 and another device or a communication network.

The bus 1040 may include a path for transmitting information between the components (for example, the memory 1010, the processor 1020, and the communication interface 1030) of the apparatus 1000.

An embodiment of this application further provides a vehicle, including modules configured to perform the image processing method in the method embodiment of this application.

An embodiment of this application further provides a terminal device, including modules configured to perform the image processing method in the method embodiment of this application.

Optionally, the terminal device may be any device, for example, a mobile phone, a tablet computer, a vehicle, a computer, a machine vision recognition device, or an intelligent security device, related to the vision field.

An embodiment of this application further provides a computing device, including at least one processor and a memory. The at least one processor is coupled to the memory, and is configured to read and execute instructions in the memory, to perform the image processing method in the method embodiment of this application.

An embodiment of this application further provides a computer program product including instructions. When the computer program product runs on a computer, the computer is enabled to perform the image processing method in the method embodiment of this application.

An embodiment of this application further provides a computer-readable medium. The computer-readable medium stores program code, and when the program code is run on a computer, the computer is enabled to perform the image processing method in the method embodiment of this application.

An embodiment of this application further provides a chip. The chip includes a processor and a data interface. The processor reads, through the data interface, instructions stored in a memory to perform the image processing method in the method embodiment of this application.

Optionally, in an implementation, the chip may further include the memory. The memory stores the instructions, and the processor is configured to execute the instructions stored in the memory. When the instructions are executed, the processor is configured to perform the image processing method in the method embodiment of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processing method, wherein the method is applied to a convolutional neural network model, and the method comprises:

obtaining a current RAW image frame;
determining a first feature of the current RAW image frame;
parsing context feature information of the current RAW image frame, wherein the context feature information comprises local feature information and global feature information;
determining a local feature and a global feature in the first feature based on the local feature information and the global feature information; and
fusing the global feature and the local feature to obtain a feature fusion map of the current RAW image frame.

2. The method according to claim 1, wherein the method further comprises:

obtaining a previous RAW image frame; and
extracting a second feature of the previous RAW image frame; and
the determining a first feature of the current RAW image frame comprises:

extracting a third feature of the current RAW image frame; and
determining the first feature of the current RAW image frame based on the second feature and the third feature.

3. The method according to claim 2, wherein the determining the first feature of the current RAW image frame based on the second feature and the third feature comprises:

determining a coincided-scene area of the previous RAW image frame and the current RAW image frame;
determining, based on the coincided-scene area, a fourth feature that is in the second feature and that corresponds to the coincided-scene area;
determining, based on the coincided-scene area, a fifth feature that is in the third feature and that corresponds to the coincided-scene area; and
determining the first feature of the current RAW image frame based on a difference between the fourth feature and the fifth feature.

4. The method according to claim 3, wherein the determining the first feature of the current RAW image frame based on a difference between the fourth feature and the fifth feature comprises:

if the difference between the fourth feature and the fifth feature is less than or equal to a first threshold, determining the first feature of the current RAW image frame based on the fifth feature;
if the difference between the fourth feature and the fifth feature is greater than a first threshold and less than a second threshold, determining the first feature of the current RAW image frame based on the fourth feature and the fifth feature; or
if the difference between the fourth feature and the fifth feature is greater than or equal to a second threshold, determining the first feature of the current RAW image frame based on the fourth feature.

5. The method according to any one of claims 2 to 4, wherein a resolution of the previous RAW image frame is half of a resolution of the current RAW image frame.

6. The method according to any one of claims 2 to 5, wherein a same weight coefficient is used to extract the third feature of the current RAW image frame and the second feature of the previous RAW image frame.

7. The method according to any one of claims 1 to 6, wherein the method further comprises:
generating an RGB image based on the feature fusion map.

8. The method according to claim 7, wherein the method further comprises:
sending the feature fusion map or the RGB image to a perception processing module.

9. The method according to claim 7, wherein the method further comprises:
evaluating the generated RGB image; and optimizing the convolutional neural network model based on an evaluation result.

10. The method according to any one of claims 1 to 9, wherein the global feature comprises at least one of global brightness, white balance, color, and contrast, and the local feature comprises at least one of local texture details and local contrast.

11. An image processing apparatus, wherein the apparatus is used in a convolutional neural network model, and the apparatus comprises:

an obtaining module, configured to obtain a current RAW image frame; and
a processing module, configured to: determine a first feature of the current RAW image frame; parse context feature information of the current RAW image frame, wherein the context feature information comprises local feature information and global feature information; determine a local feature and a global feature in the first feature based on the local feature information and the global feature information; and fuse the global feature and the local feature to obtain a feature fusion map of the current RAW image frame.

12. The apparatus according to claim 11, wherein the obtaining module is further configured to:

obtain a previous RAW image frame; and
the processing module is further configured to: extract a second feature of the previous RAW image frame; extract a third feature of the current RAW image frame; and determine the first feature of the current RAW image frame based on the second feature and the third feature.

13. The apparatus according to claim 12, wherein the processing module is further configured to: determine a coincided-scene area of the previous RAW image frame and the current RAW image frame; determine, based on the coincided-scene area, a fourth feature that is in the second feature and that corresponds to the coincided-scene area; determine, based on the coincided-scene area, a fifth feature that is in the third feature and that corresponds to the coincided-scene area; and determine the first feature of the current RAW image frame based on a difference between the fourth feature and the fifth feature.

14. The apparatus according to claim 13, wherein the processing module is further configured to: if the difference between the fourth feature and the fifth feature is less than or equal to a first threshold, determine the first feature of the current RAW image frame based on the fifth feature; if the difference between the fourth feature and the fifth feature is greater than a first threshold and less than a second threshold, determine the first feature of the current RAW image frame based on the fourth feature and the fifth feature; or if the difference between the fourth feature and the fifth feature is greater than or equal to a second threshold, determine the first feature of the current RAW image frame based on the fourth feature.

15. The apparatus according to any one of claims 12 to 14, wherein a resolution of the previous RAW image frame is half of a resolution of the current RAW image frame.

16. The apparatus according to any one of claims 12 to 15, wherein a same weight coefficient is used to extract the third feature of the current RAW image frame and the second feature of the previous RAW image frame.

17. The apparatus according to any one of claims 11 to 16, wherein the processing module is further configured to: generate an RGB image based on the feature fusion map.

18. The apparatus according to claim 17, wherein the apparatus further comprises:
a sending module, configured to send the feature fusion map or the RGB image to a perception processing module.

19. The apparatus according to claim 17, wherein the processing module is further configured to: evaluate the generated RGB image; and optimize the convolutional neural network model based on an evaluation result.

20. The apparatus according to any one of claims 11 to 19, wherein the global feature comprises at least one of global brightness, white balance, color, and contrast, and the local feature comprises at least one of local texture details and local contrast.

21. An image processing apparatus, comprising an input/output interface, a processor, and a memory, wherein the processor is configured to control the input/output interface to receive and send a signal or information, the memory is configured to store a computer program, and the processor is configured to invoke the computer program from the memory and run the computer program, so that the image processing apparatus performs the image processing method according to any one of claims 1 to 10.

22. A vehicle, comprising modules configured to perform the image processing method according to any one of claims 1 to 10.

23. A computer-readable medium, wherein the computer-readable medium stores program code, and when the program code is run on a computer, the computer is enabled to perform the image processing method according to any one of claims 1 to 10.

24. A computing device, comprising at least one processor and a memory, wherein the at least one processor is coupled to the memory, and is configured to read and execute instructions in the memory, to perform the image processing method according to any one of claims 1 to 10.

Scene
11

Lens
12

ISP 10

Sensor
13

Optical-to-
electrical
conversion
14

Analog
electrical
signal 15

Denoise
and A/D
conversion
16

Digital
electrical
signal 17

Black level
compensation
18

Lens shading
correction
19

Bad pixel
correction
20

Demosaic
21

Bayer
denoise
22

Auto
white
balance
23

Auto
exposure
25

Ygamma 24

Color
enhancement
30

Color denoise/
detail
enhancement 29

Gamut
conversion
28

Gamma
correction 27

Color
correction
26

Formater 31

I/O control
32

FIG. 1

System architecture 100

Data collection device
160

Data stream

Database
130

Training device 120

Data
stream

Execution device 110

Input
data

I/O
interface
112

Target model/rule 101

Computing module 111

Client
device
140

Output
result

Data storage
system 150

FIG. 2

Image processing result

Fully connected layer 230

Output layer 240

Hidden layer n (23n)

Hidden layer 2 (232)

Hidden layer 1 (231)

Convolutional layer/Pooling layer 220

| 226 |
| 225 |
| 224 |
| 223 |
| 222 |
| 221 |

Convolutional neural network (CNN) 200

Input layer 210

To-be-processed image

FIG. 3

FIG. 4

FIG. 5

600

| Image sensor 610 | RAW image → | Image processing model 620 | Feature fusion map or RGB image → | Perception processing module 630 |

FIG. 6

700

S710: Obtain a current frame of RAW image

S720: Determine a first feature of the current frame of RAW image

S730: Parse context feature information of the current frame of RAW image

S740: Determine a local feature and a global feature in the first feature based on the local feature information and the global feature information

S750: Fuse the global feature and the local feature to obtain a feature fusion map of the current frame of RAW image

FIG. 7

Convolutional neural network model 800

| Previous RAW image frame | → | Feature encoding module 810 | | | | | | | | |

```
Previous RAW image frame ──→ Feature encoding module 810 ──┐
                                                            ├─ First feature ──→ Feature division module 830
Current RAW image frame  ──→ Feature encoding module 810 ──┘
Current RAW image frame  ──→ Context encoding module 820 ──→ Context feature information
```

First feature → Feature division module 830 → Global feature and local feature → Feature fusion module 840 → Feature fusion map → Feature decoding module 850 → RGB image → Evaluation model → Evaluation result

Sample RGB image set → Evaluation model

Feature fusion map → Perception processing module

RGB image

Perception processing module

FIG. 8

Apparatus 900

Obtaining module 910

Processing module 920

FIG. 9

Apparatus 1000

Memory 1010

Processor 1020

Bus 1040

Communication interface 1030

FIG. 10

## INTERNATIONAL SEARCH REPORT

International application No.

**PCT/CN2021/115770**

### A. CLASSIFICATION OF SUBJECT MATTER

G06T 5/50(2006.01)i

According to International Patent Classification (IPC) or to both national classification and IPC

### B. FIELDS SEARCHED

Minimum documentation searched (classification system followed by classification symbols)

G06T; G06K; G06N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: RAW图, 原始图, 特征, 融合, 合成, 拜耳, 神经网络, CNN, BAYER, RAW IMAGE, FEATURE, FUSE, COMPOSITE, NEURAL NETWORK

### C. DOCUMENTS CONSIDERED TO BE RELEVANT

| Category* | Citation of document, with indication, where appropriate, of the relevant passages | Relevant to claim No. |
|---|---|---|
| X | CN 113313661 A (GUANGDONG OPPO MOBILE COMMUNICATIONS CO., LTD.) 27 August 2021 (2021-08-27)<br>description, paragraphs [0031]- [0178], and figures 1-7 | 1-6, 10-16, 20-24 |
| Y | CN 113313661 A (GUANGDONG OPPO MOBILE COMMUNICATIONS CO., LTD.) 27 August 2021 (2021-08-27)<br>description, paragraphs [0031]- [0178], and figures 1-7 | 7-9, 17-19 |
| Y | CN 112529775 A (HUAWEI TECHNOLOGIES CO., LTD.) 19 March 2021 (2021-03-19)<br>description, paragraphs [0153]- [0251], and figures 3-17 | 7-9, 17-19 |
| A | CN 112529775 A (HUAWEI TECHNOLOGIES CO., LTD.) 19 March 2021 (2021-03-19)<br>description, paragraphs [0153]- [0251], and figures 3-17 | 1-6, 10-16, 20-24 |
| A | CN 113168673 A (HUAWEI TECHNOLOGIES CO., LTD.) 23 July 2021 (2021-07-23)<br>entire document | 1-24 |
| A | US 2008317378 A1 (FOTONATION IRELAND LTD.) 25 December 2008 (2008-12-25)<br>entire document | 1-24 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 May 2022** | **12 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/115770**

| Patent document cited in search report | | | Publication date (day/month/year) | Patent family member(s) | | | Publication date (day/month/year) |
|---|---|---|---|---|---|---|---|
| CN | 113313661 | A | 27 August 2021 | None | | | |
| CN | 112529775 | A | 19 March 2021 | WO | 2021051996 | A1 | 25 March 2021 |
| CN | 113168673 | A | 23 July 2021 | WO | 2020215180 | A1 | 29 October 2020 |
| US | 2008317378 | A1 | 25 December 2008 | US | 8682097 | B2 | 25 March 2014 |

Form PCT/ISA/210 (patent family annex) (January 2015)